# EUROPEAN PATENT APPLICATION

(11) **EP 3 168 019 A1**
(43) Date of publication of application: **17.05.2017**
(21) Application number: 16203252.8
(22) Date of filing: 03.07.2014
(51) Int. Cl.: B28B 1/54, A41D 31/02, B32B 5/26, D04H 1/4382, D04H 3/016, D04H 3/07, D01F 6/70, D01F 6/12, D01D 7/00, D01D 5/18, D04H 1/76, A61G 11/00, A41G 11/00, D04H 1/02, D04H 1/72

(54) **FORCESPINNING OF FIBERS AND FILAMENTS**

(30) Priority: 05.07.2013 US 201361843295 P; 10.07.2013 US 201361844532 P; 06.03.2014 US 201461949079 P
(62) Divisional of application: 14820554.5
(71) Applicant: The North Face Apparel Corp., Wilmington, DE 19810 (US)
(72) Inventor: Gladish, Justin Lee, Oakland, CA California 94610 (US); Smith, Mary-Ellen, Alameda, CA California (US)
(74) Representative: Philipp, Matthias

(57) **Abstract**

A fill material suitable for use as an insulative or cushioning material in footwear, outdoor apparel, and/or outdoor equipment, the fill material comprising: a plurality of discrete units comprising clusters or loose webs of fibers, the fibers comprising superfine fibers and/or fibers in a range of 1 to 5 denier; the fibers being entangled to form the clusters or loose webs.

## Description

This application claims the benefit of and priority to U.S. Provisional Application Serial Number 61/843,295, filed July 5,2013, U.S. Provisional Application Serial Number 61/844,532, filed July 10,2013, and U.S. Provisional Application Serial Number 61/949,079, filed March 6, 2014, the contents of which are hereby incorporated by reference as if recited in full herein for all purposes.

### BACKGROUND

The inventive subject matter disclosed herein generally relates to fiber products, such as nonwoven textiles and insulative materials consisting of webs of superfine fibers, i.e., fibers with diameters in nanoscale or micron-scale ranges, for use in articles of apparel and outdoor equipment. In some embodiments, the articles have a predetermined degree of waterproofness, windproofness and breathability. In certain aspects, the inventive subject matter is directed to production of such articles and components of the articles, using novel processes for forming jets or streams of materials that solidify as superfine fibers, and which form into webs as they are collected. The inventive subject matter is also directed to related apparatus and post-web formation processing into end products.

There are several different methods and materials used to make apparel waterproof and still allow moisture vapor from the internal microclimate to pass through the jacket to the outside environment. Under certain standards used in the textile and outdoor products industries, waterproofness may be determined using American Test Standards AATCC 127 and ASTM D751 (Japanese standard JISL 1092 or Fed. Std. 191-A55, respectively). Similarly, breathability may be determined using reported using American Test Standard ASTM E96 or Japanese Standard JISL 1099.

Waterproof barriers may be made using porous and nonporous materials with hydrophobic or hydrophilic properties. These membranes can further be separated into ones based on hydrophilic monolithic coatings (non-porous continuous films), or ones based on hydrophobic and microporous films (continuous films that incorporate microporous holes to allow moisture vapor to pass through). These films can be coated directly onto a fabric and then cured with high heat. The composite structure provides waterproof and breathable protection. In other cases, the films can also be placed directly on transfer paper and then laminated (by gluing, for example) directly onto the fabric of choice, creating a waterproof, breathable fabric. The lamination method provides better durability for the film and often allows the film to be thinner, which increases breathability.

Breathability is directly related to the material properties, film type, and thickness of a barrier film. For the case of hydrophilic films, the breathability is a diffusive process governed by Fick's Law of diffusion. Water is absorbed from the surface into the film, diffuses through the film, and evaporates on the outside.

Vaporized water cannot penetrate this film under conditions of intended use. For the case of microporous films, breathability is a mechanical process where vaporized water must navigate between the microporous structure of the film and evaporate on the outside to the environment. Liquid water cannot penetrate this film because of the hydrophobic properties of the membrane. A balance of pore size, thickness, and durability is necessary to reach any performance specifications for waterproof, breathable materials. Taking garments as representative end products, neither vaporized water nor liquid water, can penetrate into a garment from the external environment because of the temperature and humidity gradients. These gradients are created between the inside microclimate of the garment and the outside environment. Because the temperature and humidity on the inside of the garment is higher, the moisture is forced out of the internal microclimate and into the outside environment, passing through the waterproof barrier.

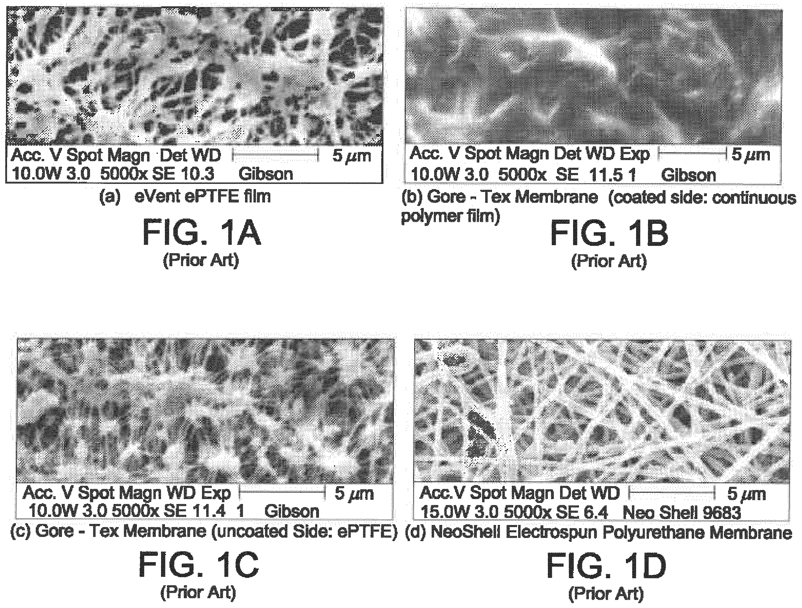

A well-known and highly successful waterproof, breathable membrane, GORE- TEX, expanded polytetraflouroethylene (ePTFE), was created in 1969. To create expanded PTFE , the PTFE is stretched, creating many tiny microscopic holes. These tiny holes are large enough to allow moisture vapor to pass through. However, the holes are smaller than the diameter of water in the liquid phase. Because the porosity is smaller than water molecules, water in the liquid phase cannot pass through the membrane. PTFE, because it is fluorinated, has a very high surface energy, which causes the surface to be very hydrophobic. Combining the pore structure with the hyrdophobicity of the surface allows the membrane to be completely waterproof and still breathable, under conditions of intended use. FIGS. 1A-1D show scanning electron microscope images of certain waterproof breathable micro-porous membranes used in waterproof, breathable laminates, each image including pertinent descriptive information on the nature of the material. (Credit: Gibson et a I, "Moisture Transport for Reaction Enhancement in Fabrics", Volume 2013, Article ID 216293, 8 pages, 29 January 2013, Hindawi Publishing Corporation, http://dx.doi.org/10.1155/2013/216293.)

Following the invention of GORE-TEX ePTFE films, many competitive membranes have been created using an array of materials that are either coated directly onto a fabric or laminated onto fabric. These include membranes based on hydrophilic polyurethanes, hydrophobic polyurethanes, PTFE, and polyesters.

Electrospinning is a technique that has been used extensively in the medical and filtration industries to create nonwoven webs or mats from an accumulation of nanofibers. Many university's and industry companies have electrospinning apparatus, patents around the process, as well as products. Most electrospinning has focused on nonwoven membrane production. The typical setup includes: a high-voltage source connected to a syringe or needle that is coupled to a source of a fluid fiber-forming material. An electrical field is created so as to charge the needle or syringe where the fluid exits. Electrodes for focusing, steering, and guiding the exiting solutions are positioned below the needle or syringe. These help guide/draw the fluid into a nanofiber from the needle or syringe and onto the collector. Other techniques used for nonwoven mat production include: dry laying, spin melting, and wet laying. A process based on fiber creation requires three main production principles: (1) web forming; (2) web bonding; and (3) fabric finishing. Web bonding can take place via chemical, thermal, or mechanical bonding. Chemical bonding, for example, can be a liquid-based bonding agent or a water-based binder. This bonding can be applied as a coating, which may be printed, or impregnated on the fabric. Options for thermal bonding include: heat and pressure; heat and contact; or powder bonding. Mechanical bonding methods can include needle punching, stitch bonding, or hydro-entanglement.

Conventionally, nonwoven textiles can be made from many materials, but the fibers used typically have short fiber lengths, which limits the durability of webs made from the fibers. Also, the fiber diameters used in conventional nonwoven textile production techniques do not reach the nanoscale level.

Nanoscale fibers can be produced from electrospinning techniques and may not always require the strenuous bonding methods previously described. However, electrospinning has many fabrication parameters that may limit spinning certain materials. These parameters include: electrical charge of the spinning material and the spinning material solution; solution delivery (often a stream of material ejected from a syringe);, charge at the jet; electrical discharge of the fibrous membrane at the collector; external forces from the electrical field on the spinning jet; density of expelled jet; and voltage of the electrodes and geometry of the collector.

Electrospun nanofibers have high surface area and small fiber diameter. They can be formed into webs that have air permeability, and the webs can increase in thickness, if necessary, without losing breathability. They are also lightweight. Electrospinning technology has been gaining success in the outdoor industry. Among recent electrospun products is the high volume production of Polartec's NEOSHELL materials. The benefits of an electrospun membrane are similar to the benefits from GORE-TEX and microporous membranes.

During the electrospinning process the nanofibers are collected on a collector. As the nanofibers are collected, tiny pores between the crossing fibers develop. These tiny spaces allow for better breathability than a solid hydrophilic membrane or even a hydrophobic, microporous membrane. Because the nanofiber membrane has tiny pores, contamination of these pores is possible. Similar to PTFE fabrications, a micrometer thin polymer coating may be placed over the nanofiber membrane to protect the pores from contamination of dirt and oil, without affecting the breathability. Additionally, because nanofiber mats are porous, they can be used for regulation of air permeability in fabrics (e.g., in fabrics used in softshell garments).

Softshell fabrics are not intended to be waterproof because seams are not taped. The protective coating is not always necessary because the membrane is sandwiched between two fabrics to protect the membrane from contamination.

Therefore, the air permeability through the nanofiber membrane is un-impeded.

NEOSHELL (Polartec) material is an example of this softshell application. Softshells can be 100% windproof or metered anywhere below 100% blockage. In other wind-blocking applications, the garment includes a lamination of a waterproof membrane between two softshell materials or the application of a dot glue matrix structure for partial wind blocking. While electrospun membranes can be a replacement for waterproof, breathable membranes and wind-metered softshells, the drawback of electrospun membranes is their durability. Hence, their use in two-layer (2L) constructions has not been available because this.

In summary, current methods of production are resource intensive: requiring multiple processing steps, water, heat, and electricity, and in the case of electrospinning high voltage (can be dangerous). Due to the processing parameters of electrospinning, materials for membranes are also limited to a relatively narrow range. Consequently, the end use possibilities are also limited. Further, existing membranes may lack durability, limiting their use in end products.

In view of the foregoing disadvantages in the prior art, there is a substantial need for improved nonwoven textile products that are based on superfine fibers such as nanofibers.

### SUMMARY

The inventive subject matter disclosed herein overcomes the foregoing and other disadvantages in the prior art. In certain aspects, the inventive subject matter is directed to production of such articles and components of the articles, using novel processes for forming jets or streams of materials that solidify as superfine fibers, and which form into two- or three-dimensional webs as they are collected. The webs may be in the nature of films, membranes, or mats. In some embodiments, the inventive subject matter generally relates to nonwoven textiles consisting of webs of superfine fibers, i.e., fibers with diameters in nanoscale or micronscale ranges, for use in articles that have a predetermined degree of waterproofness, windproofness and breathability.

The inventive subject matter is also directed to related apparatus and post-web formation processing into end products.

In other embodiments, the inventive subject matter is directed to insulating materials made of fiber webs of fibers or agglomerations of fibers. The insulating materials may be used in a variety of applications, including garments and apparel, sleeping bags, blankets, upholstery filling, etc.

The inventive subject is also directed to systems and methods for collecting fibers of any scale in agglomerations of generally parallel strands for use in forming yarns, for example. In addition, fiber mats can be cut into different widths and the yarns spun from the twisting pulling of fibers from the mats

These and other embodiments are described in more detail in the following detailed descriptions and the Figures.

The foregoing is not intended to be an exhaustive list of embodiments and features of the inventive subject matter. Persons skilled in the art are capable of appreciating other embodiments and features from the following detailed description in conjunction with the drawings. The appended claims, as originally filed in this document, or as subsequently amended, are hereby incorporated into this Summary section as if written directly in.

### BRIEF DESCRIPTION OF THE DRAWINGS

The following Figures show embodiments according to the inventive subject matter, unless noted as showing prior art.
FIGS. 1A-1B show scanning electronic microscope images and associated microscopy and materials details for several known microporous membranes. FIG. 2 schematically illustrates a composite construct that may include a layer of waterproof-breathable material produced according to the inventive subject matter.
FIG. 3 schematically illustrates a force spinning system for use in producing constructs according to the inventive subject matter.
FIGS. 4A-B schematically illustrate the use of a mold in connection with a force spinning system.
FIG. 5 schematically illustrates a down plumule, such as from a goose or duck.
FIG. 6 is a schematic comparison of conventional batting (left side) and batting (right side) according to the inventive subject matter.
FIG. 7 schematically illustrates a force spinning system for use in producing synthetic down constructs according to the inventive subject matter.
FIG. 8 schematically illustrates an alternative embodiment of a force spinning system for use in producing synthetic down constructs according to the inventive subject matter.
FIGS. 9A-B schematically illustrates a force spinning system for use in producing and collecting filaments according to the inventive subject matter.
FIGS. 10A-C schematically illustrate alternative embodiments of a force spinning system for use in producing and collecting filaments according to the inventive subject matter.
FIG. 11 schematically illustrates a further alternative embodiment of a force spinning system for use in producing and collecting filaments according to the inventive subject matter.
FIG. 12 schematically illustrates a further alternative embodiment of a force spinning system for use in producing and collecting filaments according to the inventive subject matter.
FIG. 13 schematically illustrates a further alternative embodiment of a force spinning system for use in producing and collecting filaments according to the inventive subject matter.

### DETAILED DESCRIPTION

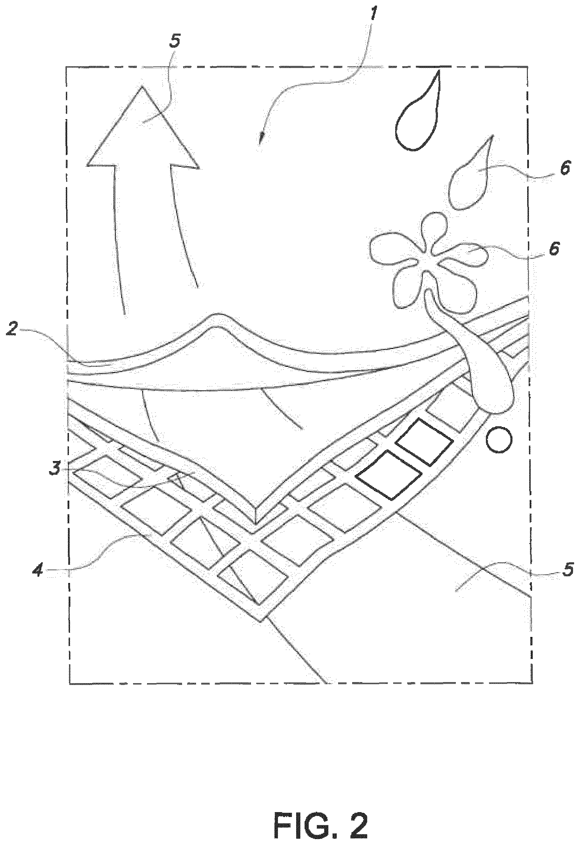

Representative embodiments according to the inventive subject matter are shown in FIGS. 2-13, wherein the same or generally similar features may share common reference numerals.

The inventive subject matter disclosed herein relates to compositions of nonwoven, fibrous films or membranes based on superfine fibers for use in construction of articles that have a predetermined degree of waterproofness, windproofness and breathability. The inventive subject matter is directed in part to production of such articles and components of the articles, using novel processes. As used herein, superfine fibers means fibers having an average diameter (or other major cross- sectional dimension in the case of non-circular fibers) in the micron scale to nanoscale. As used herein, "micron scale" means the fibers have average diameters in the range of single-digit microns to as low as about 1000 nanometers. In the textile industry, nanoscale fibers have average diameters in the range of about 100-1000 nanometers or less). In certain embodiments, superfine fibers exhibit a high aspect ratio (length/diameter) of at least 100 or higher. Superfine fibers may be analyzed via any means known to those of skill in the art. For example, Scanning Electron Microscopy (SEM) may be used to measure dimensions of a given fiber.

The superfine fibers may be formed into two- or three-dimensional webs, i.e., mats, films or membranes. The fibers may be produced using forced ejection of a selected starting fiber-forming, fluid material through an outlet port. The outlet port and associated channel feeding is configured with a size and shape to cause a fine jet of the fluid material to form on exit from the outlet port. As used herein, an outlet port means an exit orifice plus any associated channel or passage feeding the outlet port and serving to define the nature of the expelled jet of fiber-forming material. Due to factors such as surface tension, fluid viscosity, solvent volatility, rotational speed, and others, the ejected material can solidify as a superfine fiber that has a diameter significantly less than the inner diameter of the outlet port. Herein, such expulsion of flowable material from an outlet port as a jet that solidifies as a fiber may be referred to as "jet extrusion".

The jet of expelled material is directed to a collector, where it is gathered for use in an end product. The collected fiber material forms a web of two- or three- dimensional entangled fibers that can be worked to a desired surface area and thickness, depending on the amount of time fibers continue to be expelled onto a collector, and control over the surface area of the collector (e.g., a moving belt as a collector can allow for sheets of material of unlimited length). Other properties, such as web density and porosity will depend on such factors as the nature of the fibers, processing temperatures, speed and path of jets, etc. The working of the web to a desired thickness, surface area, density, and/or porosity may also include postprocessing steps, such as compression of the collected webs, thermal processing for densification or expansion (depending on nature of fibers), chemical processing, and processing with electromagnetic radiation (e.g., UV wavelengths to induce cross- linking).

In certain embodiments a rotary device imparts centrifugal force on a fiber- forming material to cause jet extrusion and consequently fiber formation. The force that is imparted on the source material may come from various systems and techniques that do not require applied electrical fields, as in electrospinning. For example, US Patent Nos. 4937020, 5114631, 6824372, 7655175, 7857608, 8231378, 8425810, and US Publication No. 20120135448, teach various devices and processes for forced ejection of fiber-forming material through an outlet port on a rotary device. The foregoing collection of patent documents includes disclosures for systems for production of fibers with average diameters in the micron-scale or nanoscale range. The foregoing patent documents are hereby incorporated in their entireties for all purposes. An alternative approach to rotary systems is based on non-rotary pressure feeding of a fiber-forming fluid through an outlet port that creates a jet of the fluid that forms into a fiber. For example, US Patent No. 6824372, which is hereby incorporated by reference in its entirety for all purposes, discloses a chamber that imparts ejection force on a fiber- forming fluid contained therein via oscillating pressure changes that are generated by a movable wall for the chamber.

It is notable that none of the foregoing patent documents teach the production of waterproof, breathable materials and products made from the disclosed apparatuses or processes.

The inventive subject matter is particularly directed to certain articles incorporating superfine fibers created by jet extrusion, the articles consisting of garments and apparel, e.g., jackets and pants; footwear, e.g., shoes and socks; headwear, e.g., soft caps and brimmed or visored hats, and facemasks; outdoor equipment, e.g., sleeping bags and shells for sleeping bags, blankets, tents, tarps and other covers; and luggage and packs, e.g., soft-sided bags, backpacks, waist packs, suitcases, duffel bags, bike messenger bags and other bags for bikers, briefcases, etc.

FIG. 2 shows an example of a possible assembly of layers used to form a composite structure 1 for use in end products, such as those mentioned above. The assembly includes an upper first layer 2 that is positioned above a second or intermediate layer 3. The intermediate layer is positioned above a third lower layer 4. In any of the layers, the layer may be a continuous layer of material or a discontinuous layer. In discontinuous layers, the layers can be characterized as interconnected materials with voids, openings, channels, etc., or they can be characterized as disconnected materials, such as an array of dots. For example, the lower layer 3 in FIG. 2 is seen as an interconnected web of material with square-shaped voids. That layer may represent a discrete sheet of such material or a pattern applied by a deposition technique such as screen printing.

In some waterproof-breathable applications for outerwear known as "3L" construction or composite, the first layer 2 is an outer layer that consists of a hard shell material.

Example materials include nylon, polyester, and wool. Layer 2 or other layers may be a woven fabric, a nonwoven fabric, or a knit fabric. Layer 3 is a microporous membrane made of PTFE or polyurethane, for example. Layer 4 is a liner layer made of a textile formed of synthetic or natural fibers, or blends. Example materials include nylon, polyester, and wool. Layer 4 may be a woven fabric, a nonwoven fabric, or a knit fabric. In this example, the microporous membrane is a waterproof, breathable membrane that allows water vapor 5 to pass through but blocks liquid phase water 6. As indicated above, layer 3 may be created using any forcespinning or other jet extrusion technique described herein. Layers 3 or 4 may be a substrate onto which the layer 3 material is collected during such technique. A third layer may be added in an inline process.

Where layer 3 in a three-layer construction is a discontinuous layer or a thinly deposited film layer, e.g., a screen-printed layer, the assembly may be referred to as a "2.5L" composite. If the composite is based on just a laminated construction of the intermediate layer 3 and an outer or inner layer, the construction may be referred to as a "2L" composite. It should be understood that the foregoing forms of composite constructions are typical for outerwear. However, any number of other layers may be included in a composite assembly.

The layers in a composite assembly may be bound together using any of various known or to be discovered means, including known means such as thermal (fusion) bonding, ultrasonic welding, chemical bonding (direct bonding of layer material to layer material, or through intermediate adhesives), and stitching and other forms of mechanical fastening.

In certain embodiments, a micro-porous membrane is formed directly on a substrate that is a component of an end product, e.g., a layer of material for a jacket or a glove.

In certain embodiments, the substrate onto which fibers are collected is a volumetric mold (positive or negative), i.e., a substrate that imparts a desired three- dimensional shape for use as or in an end product or a component thereof. The mold may comprise or include other components of the end product. The fibers may be collected on the other components associated with the mold. Or, they may be substantially isolated from other components.

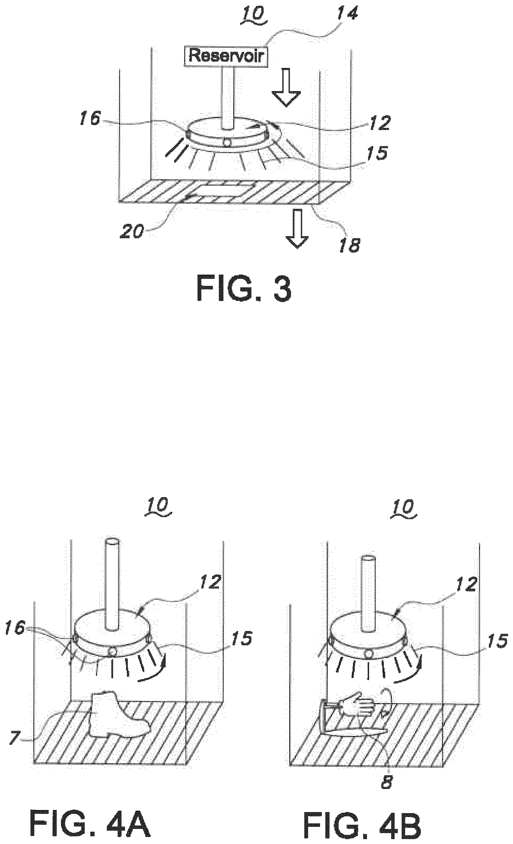

For example, the mold may be a last 7 or other form for a shoe 8. (FIGS. 4A-4B.) The mold onto which fibers are collected may be bare or it may have a layer of a material that represents an inner liner of a shoe, which becomes bonded or otherwise assembled to the overlaid fiber network. The last may have a sole unit, e.g., an outsole, midsole, and/or sockliner, associated with a bottom surface of the last, which bottom surface is oriented on the surface of tray or other support such that the sole unit is generally isolated from and does not collect fibers. However, in some applications, a portion of a sole unit may be intended for collection of fibers. For example, a peripheral edge may be exposed to fibers, allowing fibers to collect for direct bonding to the exposed edge to form an integral assembly of the sole unit with the upper for the shoe. The mold may be static or rotated during the collection process.

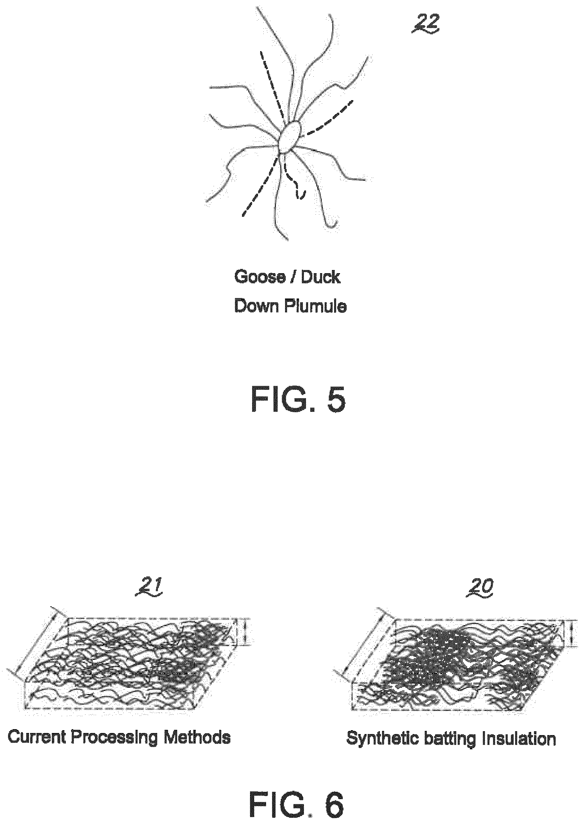

I n other examples, the mold may be configured as a garment or item of apparel, for instance, a jacket shell, pants, or part thereof, e.g. a sleeve or pant leg; a hat; an item of outdoor equipment. FIG. 5 shows a mold or form for a glove in a force-spinning system. From the foregoing, it can be understood that the inventive subject matter allows for the formation of membranes or films composed of superfine fibers that have a three-dimensional configuration and seamlessness over the molded configuration. I n some but not necessarily all embodiments, superfine fibers, including ones at the nanoscale, are formed into a 3D membrane or film that is a waterproof, windproof, and/or breathable layer according to outerwear industry standards.

As indicated above, use of rotary forces to eject a flowable, fiber-forming material as a jet or stream from an outlet port is particularly suitable for use in the inventive subject matter. Such a technique may be referred to hereinafter as "forcespinning".

In contrast to the prior art, forcespinning uses a small amount of electricity, and produces much longer fibers (up to 1 meter or more). Longer fibers allow for stronger and more durable webs. Forcespinning also allows for a highly consistent and controlled deposition of nanofibers of the same diameter, and it may not require any water, and may not involve generation of toxic chemical vapors. The force-spinning process has relatively very little waste. It is also adaptable for use with a wide range of fiber-forming materials.

### Webforming/Forcespinning Process Overview:

The processes and equipment for forcespinning are known to persons skilled in the art by virtue of various known teachings, such as some of the patent documents listed above, as well by virtue of commercial equipment suppliers such as FibeRio Technology Corporation, McAllen, Texas, USA, which supplies a line of forcespinning equipment (See http://fiberiotech.com/products/forcespinning-products/). Therefore, a detailed description of forcespinning is unnecessary, and only is a brief description will be provided herein. Forcespinning is a process to extrude super fine fibers using centrifugal force to elongate the fibers. This creates cohesive, nonwoven mats of fiber networks. Fiber crossings generate contact points. This creates inter-fiber porosity, and, in the case of relatively long fibers, intra-fiber porosity, as well. Fiber contacts and fiber morphology influence the size of the pores. Because of the network structure, these pores exist in multiple planes (vertically, horizontally, and diagonally).

In electrospinning, the surface area of electro spun membranes increases with increased fiber diameter. In electrospun membranes, pore sizes as small of 500 nm have been recorded. Water vapor molecules are approximately 0.4 nm, and water molecules (liquid) are approximately 500,000 nm. This allows vapor to pass through electrospun membranes but not water in the liquid form. The same fiber diameters and porosity is attainable with forcespinning techniques. Therefore, this similarity provides large diversity to fiber morphologies and fiber diameters that can be adapted from electrospinning, but avoiding the disadvantages or electrospinning technologies.

Furthermore, forcespinning is believed capable of creating fibers that can be three or more times the length of corresponding electrospun fibers. This difference allows for more durability in finished articles.

Referring to FIGS. 3-4, a force-spinning system 10 is shown for producing superfine fibers and collecting them into a cohesive web, such as a film or mat. The system includes a spinneret 12 that is fluidly coupled to a source of fluid or flowable material that is formable into a fiber ('fiber-forming material'). The source of material may be a reservoir 14 for continuously feeding the spinneret. The spinneret could itself include a reservoir of material that is rotated with the spinneret.

The flowable material could be molten material or a solution of material. The spinneret is mechanically coupled to a motor (not shown) that rotates the spinneret in a circular motion. In certain embodiments, the rotating element is rotated within a range of about 500 to about 100,000 RPM. In certain embodiments, the rotation during which material is ejected is at least 5,000 RPM. In other embodiments, it is at least 10,000 RPM. In other embodiments, it is at least 25,000 RPM. In other embodiments, it is at least 50,000 RPM. During rotation, a selected material, for example a polymer melt or polymer solution, is ejected as a jet of material 15 from one or more outlet ports 16 on the spinneret into the surrounding atmosphere. The outward radial centrifugal force stretches the polymer jet as it is projected away from the outlet port, and the jet travels in a curled trajectory due to rotation-dependent inertia. Stretching of the extruded polymer jet is believed to be important in reducing jet diameter over the distance from the nozzle to a collector. The ejected material is expected to solidify into a superfine fiber by the time it reaches a collector. The system includes a collector 18 for collecting the fiber in a desired manner. For example, the fibers could be ejected from the spinneret onto a surface disposed below the spinneret or on a wall across from outlet ports on the spinneret. The collecting surface could be static or movable. To form a sheet or mat 20 of fibrous material, the surface could be a flat surface. The flat surface could be static or movable.

A movable flat surface could be part of a continuous belt system that feeds the fibrous material into rolls or into other processing systems. Another processing system could be an in-line lamination or material deposition system for laminating or depositing other materials onto sheet material produced using the force-spinning system or other system for producing sheeted material of superfine fibers. In other embodiments, the flat surface could support a layer of another material onto which the fibers are deposited. For example, the layer of materials onto which fibers are deposited could be an inner or outer layer for a composite assembly of layers for an end product, such as an item of apparel.

In certain embodiments, the collecting surface is a 3D object such as a mold or 3D component of an end product. FIGS. 4A-4B show examples of 3D objects 7,8 for end products that are shoes or gloves. FIG. 5 shows a 3D object in the form of a down plumule, which may be imitated, as discussed in more detail below.

To direct fibers to a desired collecting surface (a "collector"), a fiber-directing system may be made a part of the force-spinning system. For example, the directional system may be configured to provide air from above and/or vacuum from below the desired collector to direct the fibers to the collector. (See FIGS. 3-7.)

As the superfine fibers are laid upon each other, contacts points are made at intersections, and the membrane consistents bind together. If any web-bonding of the contact points is desired, it may be accomplished via application of heat (thermal bonding), heat and pressure, and/or chemical bonding. The force-spinning system may include heating elements, pressure applicators, and chemical bonding units for achieving such bonding.

Under the inventive subject matter, forcespinning may be further applied to the deposition of multiple layers of fibers using combinations of spinneret orifice sizes, orifice geometries, and configurations. For example, fibers can be made into circles, uncollapsed circle (i.e., basically a circular fiber, hollow in the center, that is compressed into an ellipse), or flat ribbons.

Additionally, different spinnerets can be included in a force-spinning system, resulting in different fiber diameters or blends. For example, multiple spinnerets in a system can create fiber blends during the spinning. Spinnerets can also be configured with outlet ports that can create a core-sheath structure. Alternatively, a single spinneret with multiple outlet ports, each coupled to a reservoir of a different flowable, fiber-forming material can create blends.

Similarly, fiber properties can be controlled by providing on the rotary device different outlet ports of varying selected diameters. The inventive subject matter contemplates a range of outlet port diameters from between about 1 to about 1000 micrometers. Larger diameters are also contemplated if relatively high diameter fibers are desired. Channels or passages leading to outlet ports typically would have straight runs. They may be as long as 1-3 millimeters.

In a given system, the diameters and/or shapes or dimensions of the outlet ports may be uniform or they may be varied. In some embodiments, the outlet ports are formed as nozzles of a predetermined length that have decreasing taper toward the port. Outlet ports and associated passages or channels may be formed using known micromilling techniques, or to be discovered techniques. Known techniques include mechanical millings, chemical etching, and laser drilling and ablation. In addition to superfine fibers, forcespinning systems according to the inventive subject matter may be used to create fibers of standard textile size (e.g., 50-150 denier).

These superfine or other fibers may include functional particles such as, but not limited to, antimicrobials, metals, flame-retardants, and ceramics. These materials may be introduced into the spinneret along with the fiber-forming material. They may bond to the material covalently, by hydrogen bonds, ionic bonds or van der Waals forces, for example. A catalyst may be included in the material mixture to facilitate any such bonding.

In any case, for the above-mentioned end products, the fiber mats (ranging from different fiber sizes, materials, or blends) can be layered together to create whole garment composites, or in the case of 3D objects, whole end products, e.g., shoe composites and gloves. The collected fibers can be carded for spinning into yarn. The yarn may be used in, for example, apparel, footwear, and equipment end products, to take advantage of the unique properties that may be exhibited by nanoscale fibers. The fiber-forming materials can be chosen by melt temperatures to provide different structural rigidity in the final end product when heat cured after forcespinning. This may be especially important for 3D structures such as gloves and shoe uppers, which require relatively more durability than other end products, such as outerwear.

The inventive subject matter contemplates use of forcespinning to create nanofiber membranes for use in 2L, 2.5L, and 3L waterproof/breathable products. After membranes are spun, they may, or may not, be coated with a protective film to protect the pores from contamination. Depending on membrane end use, the fibers may optionally be extruded with an oleophobic component to protect the membrane from contamination of dirt and oils, or a similar oleophobic coating can be applied after the membrane is spun. Coating with an oleophobic coating will not cover the pores in the membrane or adversely affect the breathability or air permeability, but will still modify the nanofiber surface as to not attract dirt and oil and hence prevent contamination.

The membranes may be directly spun onto the chosen face fabric of the final material, or the membranes may be spun onto contact paper and then laminated onto the chosen face fabric of the final material. The membrane, either deposited directly on the fabric, or material, or laminated on the material, may also be used in softshell constructions. The diameter of the nanofiber affects pore size of the membrane. The cross-sectional morphology of the fibers and fiber thickness affect the surface area of the fibers. Increasing the surface area of the fibers can reduce the pore size. Reducing the fiber diameter is a way to increase surface area/volume ratio. Therefore, fiber diameter is a way to control thickness, durability, and moisture vapor transfer.

Thickness affects weight of the membrane. Collectively, these factors influence the breathability and durability of the nanofiber membrane. Nanofiber diameters according to the inventive subject matter can be anywhere in the nanoscale range. A suitable range for applications described herein is believed to be about 100 nm to about 1000 nm. Pore size influences air permeability. Therefore, the air permeability for a membrane may be controlled for most applications using nanofibers in the foregoing size range. Fiber-forming materials of use for softshell and waterproof breathable applications include PFTE dispersions, polyurethanes, nylons, polyesters, bio-based materials, e.g., such cellulosic materials, silk proteins, and other fiber-forming materials that are to be discovered, including other polymers derived from natural and synthetic sources.

In certain embodiments of the inventive subject matter, the flowable, fiber- forming material may be a mixture of two or more polymers and/or two or more copolymers. In other embodiments, the fiber-forming material polymers may be a mixture of one or more polymers and or more copolymers. In other embodiments, the fiber-forming material may be a mixture of one or more synthetic polymers and one or more naturally occurring polymers.

In some embodiments according to the inventive subject matter, the fiber- forming material is fed into a reservoir as a polymer solution, i.e., a polymer dissolved in an appropriate solution. In this embodiment, the methods may further comprise dissolving the polymer in a solvent prior to feeding the polymer into the reservoir. In other embodiments, the polymer is fed into the reservoir as a polymer melt. In such embodiment, the reservoir is heated at a temperature suitable for melting the polymer, e.g., is heated at a temperature of about 100° C. to about 300° C.

In some embodiments according to the inventive subject matter, a plurality of micron, submicron or nanometer dimension polymeric fibers are formed. The plurality of micron, submicron or nanometer dimension polymeric fibers may be of the same diameter or of different diameters.

In some embodiments according to the inventive subject matter, the methods of the invention result in the fabrication of micron, submicron or nanometer dimensions. For example, it is believed possible to fabricate polymeric fibers having diameters (or similar cross-sectional dimension for non-circular shapes) of about 15, 20, 25, 30, 35, 40, 45, 50, 55, 60, 55, 70, 75, 80, 85, 90, 95, 100, 110, 120, 130, 140, 150, 160, 170, 180, 190, 200, 210, 220, 230, 240, 250, 260, 270, 280, 290, 300, 3I0, 320, 330, 340, 350, 360, 370, 380, 390, 400, 410, 420, 430, 440, 450, 460, 470, 480, 490, 500, 510, 520, 530, 540, 550, 560, 570, 580, 590, 60, 610, 620, 630, 640, 650, 660, 670, 680, 690, 700, 710, 720, 730, 740, 750, 760, 770, 780, 790, 800, 810, 820, 830, 840, 850, 860, 870, 880, 890, 900, 910, 920, 930, 940, 950, 960, 970, 980, 990, 1000 nanometers, or 2, 5, 10, 20, 30, 40, or about 50 micrometers. Sizes and ranges intermediate to the recited diameters are also part of the inventive subject matter.

The polymeric fibers formed using the methods and devices of the invention may be of a range of lengths based on aspect ratios of at least 100, 500, 1000, 5000 or higher relative to the foregoing fiber diameters. In one embodiment, the length of the polymeric fibers is dependent at least in part, on the length of time the device is rotated or oscillated and/or the amount of polymer fed into the system. For example, it is believed that the polymeric fibers may be formed having lengths of at least 0.5 micrometer, including lengths in the range of about 0.5 micrometers to 10 meters, or more. Additionally, the polymeric fibers may be cut to a desired length using any suitable instrument. Sizes and ranges intermediate to the recited lengths are also part of the inventive subject matter.

As used herein, the terms "fiber" and "filaments" may be used interchangeably, with the term "filament" generally referring to a category of "fiber" of high aspect ratio, e.g., a fiber of relatively long or continuous lengths that can be spooled around a desired object. Further, synthetic fibers are generally produced as long, continuous filaments. In contrast, "staple fibers" usually refers to natural fibers, which tend to be relatively short because that is how they are typically grown. Long synthetic filaments can be chopped into short staple fibers. In summation, a filament is a fiber, but a fiber can be in different lengths (staple or long or continuous).

In some embodiments, the polymeric fibers formed according to the methods of the inventive subject matter are further contacted with or exposed to an agent to reduce or increase the size of pores, or the number of pores, per surface unit area in the polymeric fibers. For example, various known chemical agents may be used, which are known to increase or decrease cross-linking in polymers or denature non-covalent linkages. Non-chemical agents may include heat and electromagnetic radiation.

The inventive subject matter is particularly suited for producing end-products having waterproof and breathable protection, as well as wind protection. Other nanofiber webs for waterproof and moisture breathability have been produced via electrospinning. Similar dimensions are believed possible by jet extrusion, but with greater fiber lengths than possible via electrospinning. The dimensions of these are 1000 nm or less. The webs are expected to have a range of fabric weights and weigh about 5 to about 25 g/m<2>, with a thickness of about 10 to about 50 micrometers (See, e.g., Korean Patent Document No. 20090129063 A). For forcespun microporous membranes for waterproof/breathable applications, PTFE is an example of a suitable fiber-forming material. Suitable PTFE fiber diameters may range from about 100nm to about 1000 nm. A range of thicknesses of webs is possible. A suitable thickness of the membrane thickness may be from about 7 micrometers to about 50 micrometers. A range of pore sizes in webs is possible. Suitable pore sizes for waterproof/breathable applications include about 250 nm or greater.

A wide variety of materials (synthetic, natural, bio-based-plants, bio-based-fermented) and fabric/substrate types (knits, wovens, and nonwovens) are contemplated for use in end products. Non-limiting examples of superfine fibers that may be created using methods and apparatuses as discussed herein include natural and synthetic polymers, polymer blends, and other fiber-forming materials. Polymers and other fiber-forming materials may include biomaterials (e.g., biodegradable and bioreabsorbable materials, plant-based biopolymers, bio-based fermented polymers), metals, metallic alloys, ceramics, composites and carbon superfine fibers. Non-limiting examples of specific superfine fibers made using methods and apparatuses as discussed herein include polytetrafluoroethlyene (PTFE) polypropylene (PP), polyurethanes (PU), Polylactic acid (PLA), nylon, bismuth, and beta-lactam superfine fibers.

Superfine fiber collections may include a blending of multiple materials, as indicated above. Superfine fibers may also include holes (e.g., lumen or multi-lumen) or pores. Multi-lumen superfine fibers may be achieved by designing, for example, one or more outlet ports with concentric openings. In certain embodiments, such openings may comprise split openings (i.e., an opening that possesses one or more dividers such that two or more smaller openings are made). Such features may be utilized to attain specific physical properties. For instance, the fibers may be produced for use as thermal insulation, such as in the insulation applications described below, or for use as elastic (resilience) or inelastic force attenuators.

In certain embodiments, fibrous webs of the present disclosure may include elastic fibers, such as elastane, polyurethane, and polyacrylate based polymers, to impart stretchability to the nonwoven textiles made according to the inventive subject matter.

In some embodiments, the inventive subject matter is directed to fibers, and constructs of thermally insulative fibers that are produced according to the jet extrusion techniques disclosed herein. In some possible embodiments, the constructs may be made in a form similar to natural down, which is an agglomeration of plumules. FIG. 5 is a schematic of a single down plumule 22. The plumule has a central node with a plurality of arms radiating outwardly from the node. Such a structure allows for a high degree of air entrapement relative to linear fiber having a length similar to the diameter of the plumule.

The insulative constructs according to the inventive subject matter may also be in a form similar to synthetic batting insulation, such as those marketed under such names as Primaloft, Thermore, or Thermolite. Typically, such products are based on polyester fibers or blends of polyester and other natural or synthetic fibers, such as fibers of Merino wool. FIG. 6 is a schematic representation of how such a construct 20 would appear relative to known products 21, i.e., they may be constructed in a matt-like form based on entanglement or agglomeration of linear fibers. Typically, such bats are produced by melt blowing of fibers. In contrast to the prior art, superfine fibers according to the jet extrusion teachings herein may be used to achieve improved performance based on the superfine fiber diameters and/or use of nanotobes or other structures that increase volume of entrapped air per a given unit of density of insulative material. The superfine fibers may be blended with larger diameter fibers that provide strength or durability to the blended construct of fibers.

The fibers in a construct of insulative materials may be of substantially the same deniers or they may be a blend of deniers. In either case, a suitable range for many applications is 1-5 deniers. In apparel applications, a suitable range may be 1-3 deniers.

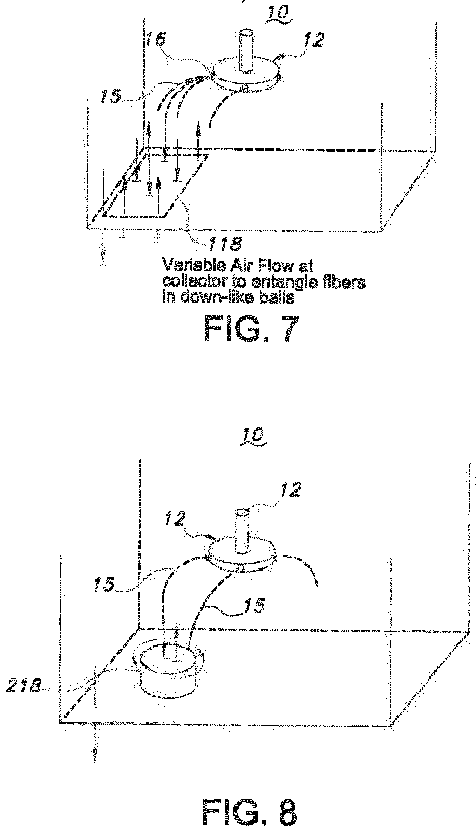

Node-like structures can be made that mimic the 3D structures of goose down plumules, for example. In general, a unit of fiber structure that has a high degree of crossing fibers simulates a node at each crossover point. Accordingly, the inventive subject matter contemplates forming structures with a high degree of cross overs per a given unit of density, and many loose and relatively small web structures that can agglomerate with the loftiness of down plumules. In other words, the synthetic down insulative structures are not extended sheets or mats of material but instead entangled or intersecting webs of micro-sized units that provide fill and loft comparable to or better than down. FIG. 7 schematically illustrates one possible method of creating a high degree of cross over and many loose structures. In this example, the jet expulsion system is a forcespinning system 10. The system includes a collector 118 associated with variable or multidirectional air flow that creates a vortex or turbulence (airflow indicated by up/down arrows through a collector surface in FIG. 7). The vortex or turbulence causes the fibers or fiber segments coming off the spinneret to encounter each other in random or otherwise intersecting paths in a relatively confined space. This causes a high degree of fiber cross over and short sections of webs. The spinneret may issue the jets from the associated outlet ports in pulses to facilitate the formation of discrete balls of entangled fibers. Other means for causing such an effect may include controlling the tensile forces on the jetted fibers or selecting fiber materials of desired tensile strength such that the webs of fiber break apart before growing undesirably large, creating many packets of small, loose webs. In other embodiments, mats or sheets of insulating material may be cut into tiny sections, using known techniques such as mechanical, chemical or electromagnetic cutting mechanisms.

FIG. 8 shows an alternative system for creating insulative constructs that mimic down. In this system, the collector is in the nature of a rotating vessel 218. The jetted fibers frictionally interact with the rotating vessel causing the fibers to decelerate and entangle with each other. The forces are such that large continuous mats of material do not form, just loose, tiny webs of material. The vessel may also be coupled with a variable airflow mechanism similar to cause crossover of fibers, as described above.

Using the superfine fibers and techniques according to the inventive subject matter, it is expected that constructs of insulative material can be achieved that will have a fill power equivalent of at least about 450 to about 1,000. It is also contemplated that some insulative constructs may have a fill power equivalent of over 450, or over 550, or over 650, or over 750, or over 850, or at least 1,000. Sizes and ranges intermediate to the recited fill equivalents are also part of the inventive subject matter.

Additionally, insulative constructs made using nanofibers can create additional air space relative to prior art insulative materials. The additional air space results in better insulating properties and hence warmer-feeling garments, for example. For instance, nanotubes and other fiber geometries that have increased surface area, relative to a solid-core, round fiber of the same weight and length, will allow for greater air entrapment and higher insulative values.

### Making Filaments and Yarns in Long or Continuous Runs:

After fibers are created, fibers are made into yarns. For synthetic fibers there are two types of yarns: filament yarns and spun yarns. Filaments yarns are composed of many lengthy fibers agglomerated together and typically oriented with longitudinal axes in parallel with each other. A filament is a single continuous fiber that has been extruded. Filaments can be grouped or agglomerated together with the individual fibers in a generally parallel orientation. The bundle of grouped fibers is then twisted to create a thicker and stronger yarn. Fabrics use both muliti-filament yarns and single monofilaments.

Synthetic spun yarns are produced using staple fibers. Staple fibers are short fibers of about 0.75 to 18 inches long. Excluding silk, natural fibers are staple fibers. To create synthetic staple fibers, the fiber is extruded, drawn and tensioned or crimped, and then cut to the staple fiber length. These staples are then bailed for downstream processing into woven, knit, or nonwoven fabrics. Staple fibers are then combined together and spun to create yarn made up of thousands of short filaments. These spun yarns are produced in much the same way as cotton or wool yarn is produced. Carding is the mechanical process that disentangles, cleans, and orients fibers into a continuous web that is used to spin yarn. The process breaks up clumps of unorganized fibers and aligns the fibers of similar lengths. Natural fibers, such as wool and cotton, are often in clumps of entangled fibers of different fiber lengths. These clumps are carded and combed into parallel, aligned staple fibers of similar length. These staple fibers are then spun into yarn that is used in woven and knitted fabrics.

In the case of cotton bundles, the basic carding process includes: opening the tufts into individual fibers, removing impurities, selecting fibers on the basis of length (removing the shortest ones), removing naps, orienting the fiber in a parallel fashion and stretching the fiber, transforming the lap into a sliver, resulting in a regular mass of untwisted fiber. A sliver is the long bundle of created fiber that is used to spin yarn.

### Forcespun Staple Fibers:

As disclosed above, forcespinning can create long nanofibers. These long fibers can be cut and carded as staple fibers. It is possible to change the size of the spinnerets, increasing or decreasing the orifice diameters, to draw long, fibers of larger diameter size. For example, deniers ranging from 1 to 300 denier or thereabout are contemplated from forcespinning methods. A given spinneret may have one or more orifices that are all of the same size. Or, it may have a plurality of orifices of different diameters or configurations for a plurality of fiber deniers or configurations.

Fiber mats consisting of fibers in the 1D-300D range can act similarly to that of bundles of natural fibers like cotton and wool. It is believed that using the novel systems disclosed and contemplated herein, loosely packed mats or battings, of long, continuous force spun fibers can be processed into staple fibers using the same processes used for natural fiber. Wool, cotton, jute, etc., may use different mechanisms for combing and carding machines. Therefore, there are many options available to separate the forcespun mats into desired lengths of staple fibers.

Creating staple fibers from forcespinning advantageously uses little energy. Long continuous filaments are agglomerated in generally parallel orientation, and they can easily be cut and carded to produce uniform staple fibers. Conventional processes are limited by fiber size. In addition, forcespinning provides the ability to create fibers from a variety of raw materials, as disclosed herein. In contrast, conventional processes have a limited ability to efficiently produce a variety of natural, synthetic, and bio-based fibers. For example, polyester can be extruded in long continuous filaments (like fishing line). These filaments can be used as is, or cut into staple fibers. For forcespinning, the fibers are relatively long, compared to electrospinning, and the mats can then be cut and carded like staple fibers. The fiber mats are representative of cotton bundles of unoriented staple fibers. However, it is contemplated that as the orifice sizes on the spinnerets increase to fiber deniers of 50 and above, the strength of the fiber increases. Because of this, the length of the extruded fibers can increase. It is contemplated that the parameters, such as rotating speed, orifice size, and solution melt can be adapted for a desired result without undue experimentation. In any case, i.e., forcespinning of nanofibers to large denier fibers, the carding and cutting into staple fibers would follow similar approaches. Forcespinning Continuous Filament Fibers:
From the nanoscale to larger diameters, the inventive subject matter is directed to the production of longer more continuous filaments from forcespun fibers. Relatively large fibers diameters of 1 denier-300 denier or thereabout, as well as other deniers or diameters disclosed herein. Filament tensile strength is increased as fiber diameters increase.

Over traditional extrusion processes, the approaches disclosed herein advantageously reduce the amount of heated drums and tension devices required to draw and orient the fiber because the forcespinning naturally orients the fibers.

Traditional drawing and orienting of fibers, and extrusion, can require space of up to 3 stories of height. Forcespinning is a single apparatus of small dimension, quiet, and requires little energy. In the case of some fibers, the requirement may be to include heaters and tensioning devices. This is also envisioned, and can be included at points between the collector and spinneret or in post processing. However, post processing is envisioned at smaller scale than requirements of current manufacturing. Similar to nanofiber mats, larger forcespun mats can be twisted into yarns directly from the mats. This twisting causes entanglements similar to that yarns from staple fibers. If a higher degree of fiber orientation is desired the mats can be carded as previously described.

Because of the strength of forcespun fibers of larger diameter, other methods of collection are also envisioned.

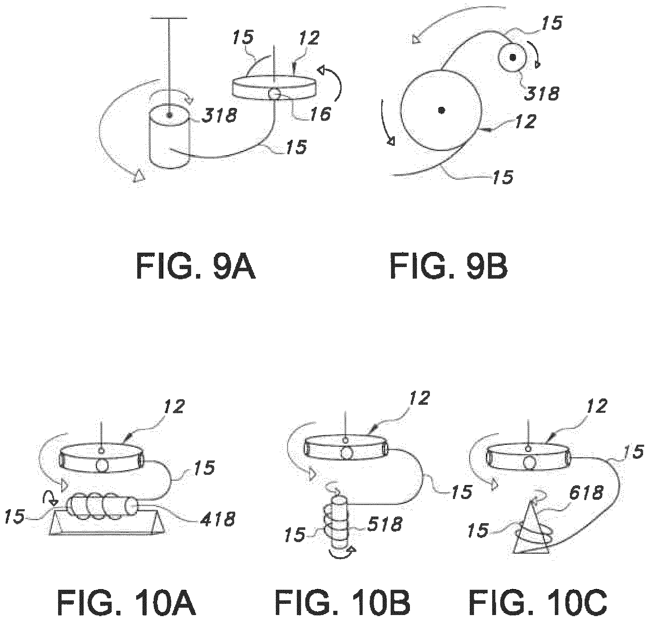

FIGS. 9-12 show alternative embodiments of a force spinning or other jet extrusion system with a fiber collection system that collects filaments or fibers and spool them as continuous filaments or fibers. (System elements are not meant for conceptual illustration and are not meant to be at scale.) As a jet of fiber-forming material 15 exits the orifice of a spinneret and centrifugal force draws the filament or fiber, and it aligns the fiber and provides strength by orienting the polymer chains within the fiber. This is similar to other jet extrusion processes disclosed herein. For example the jet may include a material selected from the group of polyesters, nylons, natural fibers (e.g., cellulose), bio-based (natural derived, synthesized), blends of biocomponent fibers and fibers of unique cross-sections (core-sheath), and any other material disclosed or contemplated herein. The fiber-forming material may include dispersed particles to increase fiber performance or conductance, for example. Any of the fiber- forming materials may be collected as continuous filaments using a myriad of collection methods. A few representative methods are outlined below. However these examples are not meant to be an exhaustive list. Those skilled in the art will realize from the teachings herein that many techniques and apparatuses can be employed to collect the fibers.

Forcespinning's use of a spinneret that ejects a jet or stream of material under centrifugal force offers similarities to the production of cotton candy. As used herein, "stream" or "jet" means a fibrous or filamentous flow of material in any state, e.g., liquid, softened, or solid. An example of a solid stream of material would be a moving yarn being pulled to or from a spool. As used herein, "structure" or "strand" in the context of fibers means a solid phase fibrous or filamentous material. In the processing steps contemplated herein, the structure or strand may be present in a dynamic state, as in a streaming state, or it may be present in a static state.

In cotton-candy makers, strands of cotton candy fiber are formed by spinning a liquid that exits from a spinneret centered in a collector. The collector in which the spinneret is centered is basically a round bowl. The strands collect on the surrounding, vertical walls of the collector. A spooler, which is an elongate object, e.g., a paper cone, is then moved in a circular path along the walls of the collector, with the longitudinal axis of the spooler oriented parallel to the collector's walls. While the spooler circles the walls, it pulls off the fiber strands deposited on the walls. While the spooler is circling along the walls, it is also rotated around its longitudinal axis. This additional rotation winds the fibers around the spooler, to create a uniform deposition of fiber strands around the spooler. In the case of cotton candy, the fibers are weak, short, sticky, and wound without tension. Therefore, the process is not intended for use where compact spooling of fibers is needed, or where fibers are not sticky and easily attracted to a spooler from the walls on which they are deposited. Further, the cotton- candy maker approach offers no solution to the problem of how to wind the mat of collected fibers into a continuous filamentous form that is preferably, but not necessarily, under some tension to enable compact winding and spooling.

In a novel approach that is represented in the following examples, collection and spooling methods are disclosed for use with the forcespinning of continuous fibers intended for use in textile applications. The inventive subject matter overcomes the deficiency of the simple cotton-candy maker approach, which is not concerned with reducing the cotton-candy mats to a lengthy filamentous form, which may be under some tension.

FIGS. 9A-13 show examples of collection systems that include a collector that has a surface for receiving streaming material from the spinneret. According to the inventive subject matter, a collector 318 may be associated with and rotated in coordination with the spinneret's spinning orifice. Alternatively, a stationary, non-orbital collector may be stationary and located beneath the geometric center of the spinneret 12 for a forcespinning system. The relative spin rates of the collector and spinneret are coordinated so that the filamentous fiber is spooled onto the collector within a tension range that (1) achieves a desired state of compactness without straining the fiber to a breakage or deformation state; and (2) avoids a slackness in the streams of formed or forming filaments as they are spooled so as not to whip and break or deform the formed or forming filaments. In addition to the collector, the collection system may include other components, such as heaters and rollers between the spinneret and collector, or subsequently in post-processing of the fiber, to help manage tension and stream or filament orientation.

The collection system would naturally include other components (not shown), such as electric motors for driving the collectors or other components, sensors or registers for determining rates of rotation of the spinning components, or flow rates from jet outlet ports or for measuring strain or loads of materials or components. The system may also include manual and/or computer controls, e.g., microprocessors and memory with stored programs, for managing the rates of relative rates of spinning and strain or load on the filaments being formed or formed. FIGS. 9A-B are side and top schematic views of one possible collection system for streams of fiber materials extruded from a spinneret. In this case, the collector 318, e.g., a drum or cylinder, orbitally rotates around the spinneret at some distance outwardly from the outlet port or ports for the spinneret, which may be disposed on or along the circumference of the spinneret. The collector is spaced sufficiently from the spinneret so as to allow proper extrusion and drawing of the filament or fiber via the centrifugal force of rotation. The distance of the collector from the outlet port, both radially and linearly, is determined by the outlet port size and the diameter of the fiber created. This is because the jet of fiber-forming material 15 requires a certain distance of inertial draw to properly orient the polymer chains within the forming fiber. Other parameters to consider are the properties of the material being extruded. For example, solution viscosity and polymer chain alignment within the fiber are factors that affect the extendable distance of the fiber using inertial force. Reducing the whipping effect of the fiber, as well as vortices caused by the rotating collector, are also factors to consider. Any of the foregoing factors may be considered and addressed empirically by persons skilled in the art without undue experimentation. Thereby, appropriate spacing of the collector from the spinneret may be determined empirically or otherwise, as well as relative rates of rotation for the collector and spinneret, as discussed below.

Referring to the system of FIGS. 9A-B, the collector 318 is spaced away from the outside circumference of the spinneret 12 and orbits the spinneret. The collector simultaneously is spinning around its own longitudinal axis as it orbits the spinneret. The collector's axis of rotation is parallel to the spinneret's axis of rotation. The axial spinning of the collector causes the fiber to wind closely to and agglomerate around the collector, with filaments or fibers oriented generally parallel to one another. In this example, the rotating spinneret and the collector can move relative to one another in the same plane or a plane parallel to the spinneret. In this example, the collector orbits a stationary spinneret (except for axial spinning). Alternatively, the spinneret can orbit the collector, which may be stationary. Either orbital arrangement allows for a uniform fiber take-up distance through an orbit.

The rate (rpm) at which the collector spins may be calculated or determined according to specific filament or fiber materials and diameters. Spinning of the collector around its own axis creates tension in the winding of fiber material. The fiber strength will determine the amount of tension required on the winding to properly wind the filament or fiber about the collector. Breaking of the fiber can occur if the rpm of the collector is too fast, exceeding the tensile strength of the fiber or filament. If the rpm is too slow, the filament or fiber may whip. This can cause weak points in the filament or fiber or it can cause the filament or fiber to break. Collection conditions may vary from material to material but can be established empirically, as noted above. Those skilled in the art will understand that mechanisms required to guide the fiber onto the winding collector are numerous, and all such mechanisms are contemplated, even if not explicitly disclosed herein.

A spinning collector with rpm's calibrated with a filament or fiber take-up speed equal to the slack in the inertial extension from the spinneret's outlet port may be achieved by other systems, not just the system of FIGS. 9A-B. In accordance with the inventive subject matter, FIGS. 10A-C are schematic views of other possible systems where a collector 418, 518 or 618 is disposed underneath the spinneret, in contrast to the forcespinning and collector system of FIGS. 9A-B, which is spaced outwardly from the circumference of the spinneret. In the systems of FIGS.10A-C, a collector is disposed underneath the spinneret and may be stationary relative to the spinneret (except of the collector's axial spinning). In the case of stationary collector, a suitable location would be directly below the geometric center of the spinneret, i.e., the spinneret's axis of rotation. FIGS.10A-C show different stationary spinning collectors 418, 518 or 618 disposed below the center of the spinneret 12. The collector is spinning around its own longitudinal axis but does not orbit the spinneret, as in the embodiment of FIGS. 9A-B. The longitudinal axis is parallel to the plane in which the spinneret rotates. That axis is perpendicular to the axis around which the spinneret rotates.

The collector of FIG. 10A is positioned over a backstop or guide 24 that can serve to deflect or feed the filament or fiber to the horizontal collector aligned with and axially spinning over the back stop or guide. Accordingly, the fibers are collected in planes stacking horizontally to the spinneret. FIG. 10B shows a collector disposed under the center of the spinneret that rotates around its own axis but does not orbit the spinneret. The filaments or fibers are spooled in planes stacking parallel to the plane in which the spinneret rotates. It is noted that in the variations of FIGS.10A-C, the collectors will collect filaments or fibers, at times, with an unequal distribution across the length (horizontal alignment) or height (vertical alignment). In such cases, the collector systems may include moving or stationary guides and apparatus to move the filament or fiber along the spinning collector for uniform winding. Collectors of stationary type or moving within a plane or rotating around the spinneret can incorporate any geometric shape: cylinder, conical, or others without exclusion, as indicated by the conical or triangular or pyramidal collector representation of FIG.10C, which is otherwise like the collector of FIG.10B.

In the case of any collection and winding process the initial winding may require a ramp up process. For this the spinneret may spin slowly to allow the filament or fiber to begin winding onto the collector.

After sufficient winding, the spinneret, the rotating collector (if non-stationary), and the spinning of the collector are ramped up to the necessary rpm for the desired fiber characteristics. After proper conditions are established, the system may provide a synergy of coordination and winding that does not require this pre-winding step.

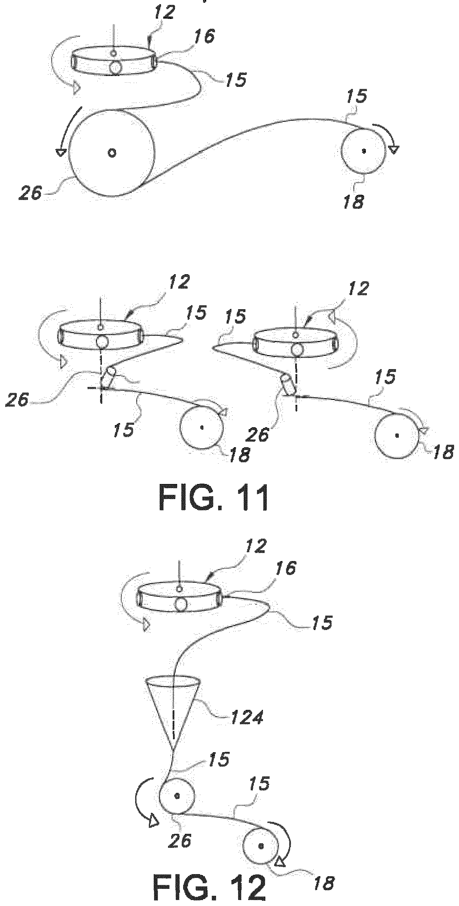

In the case of a method that may require a pre-winding step, FIGS. 11, 12, and 13 offer a range of unique and separate techniques. FIGS. 11A-11C envision a cutout (not shown) below the spinneret where the filament or fiber itself can be drawn through.

However, it is envisioned that a cutout may not be necessary, and the correct amount of tension can be created directly below the center of the spinneret. In this embodiment, the filament or fiber is extruded from the rotating spinneret 12 at a slow rpm, allowing the filament or fiber to be fed around a rotating drum, cylinder, or wheel, or disk, which is referred to herein as a "driver" 26. This driver may be located directly below the geometric center of the rotating spinneret. From the spinneret, the filament or fiber 15 is fed around the driver and then drawn onto a collector 18, located at some distance from the driver. Once affixed to the collector, the rpm of the spinneret increases, as does the take-up rpm on the collector. At a predetermined spinneret rpm for filament or fiber extrusion (specific to, e.g., the fiber solution, orifice diameter, and/or inertial extension required for the fiber), the rpm of the collector take-up is ramped up to a calculated rpm necessary to allow filament or fiber winding, with or without tension in the fiber. This process allows for the necessary filament or fiber slack in the extension of the filament or fiber from the spinneret 16 outlet port so as not to affect the quality of the filament or fiber. Because of the unique spinning of the spinneret, it is envisioned that an intermediate driver may be pivoted 180 degrees and rotates 360 degrees in the vertical plane, horizontally (perpendicularly) to the axis of rotation of the spinneret.

This allows equal tensioning of the drawn filament or fiber from any radial position that extends outwardly from the center of the spinneret's axis of rotation. The driver may be considered frictionless, or made essentially frictionless, to allow the collection or tension to be sourced only from the collector.

Another possible embodiment uses a conical guide 124 positioned below the spinneret, as seen in FIG. 12. Using this scenario, a filament or fiber is led through the conical guide onto a roller. From the roller below the conical guide, the filament or fiber is fed to the spinning collector. A conical guide reduces the stress on the filament or fiber by guiding the fiber fluidly to the roller directly beneath the guide. The filament or fiber can be guided though the middle of the conical guide or around the outside and then centered onto the driver.

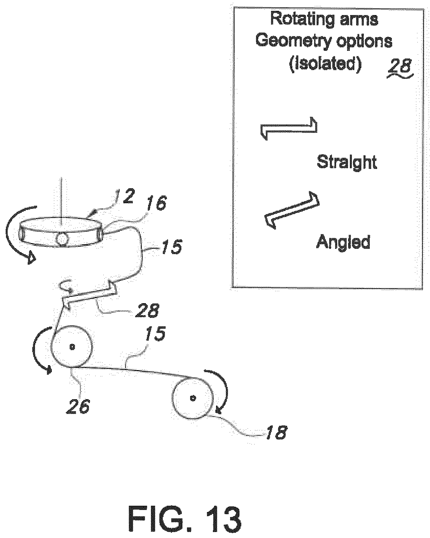

Another possible embodiment, seen in FIG. 13, employs a rotating arm of varied geometry to guide the filament or fiber to the driver 26. In this schematic, the geometry of the rotating arm, as well as distance from the spinneret, employs the same parameter considerations, as described for FIG. 9.

While a spinneret can orient fibers in the same direction, directional air or other gas flow may be used to direct a stream of material extruded from a spinneret or even a stationary extrusion device. Mechanisms for directing airflow include both positive and negative pressure system, e.g., fans, vacuums, and pressurized gas sources. Airflow may be directed at any desired angle against a stream of material so as to redirect the streams into a desired path and orientation. For example, the stream of material may be directed onto a continuous belt. In this and any other embodiments, a movable flat surface could be part of a continuous belt system that feeds the fibrous material into rollers or spoolers or into other processing systems.

The foregoing embodiments are not meant to be an exhaustive list of the methodologies used to create and capture continuous fibers from a forcespinning apparatus. From the teachings herein, persons skilled in the art may use forcespinning to produce and collect continuous fibers for any application in woven or knitted goods or any other application that uses continuous fibers.

### Definitions (as generally described in literature for the Outdoor and Textile Industries):

Waterproof/breathable (composite fabric): a textile (knit or woven) composite that withstands water penetration of a certain pressure as defined by different standards but it also breathable, as measured by different standards allowing moisture to pass through the composite material. The composite can contain 1 textile layer and the waterproof breathable membrane (defined as a 2 layer waterproof-breathable composite), or the waterproof-breathable membrane can be sandwiched between 2 textile layers (defined as a 3 layer waterproof-breathable composite). In the case of a 2.5 layer waterproof-breathable composite, the membrane typically has a print applied on the membrane surface opposite the outer textile side. This print can be a color, design, and/or include functional particles in any pattern. Textile layers can be woven or knitted structures of any fiber type (natural, synthetic, bio-based, biodegradable) or blends of any fiber types. All seams are sealed using seam tape to ensure waterproofness.

Waterproof/Breathable Membrane: A flexible material that is (1) waterproof, and (2) breathable to moisture, according selected standards. Membranes can be hydrophilic, hydrophobic, monolithic, or microporous. A bi-component membrane combines two layers, for example GORE-TEX ePTFE membranes and another layer of material.

Air Permeability: Ability of a textile, membrane, or composite to allow air to penetrate through the material; measured in CFM, cubic feet per minute.

Moisture Vapor Breathability/Vapor Permeability: Referred to the ability of a textile, waterproof/breathable membrane, or composite to allow moisture (liquid or water vapor) to pass through the material.

Hardshell (2L, 2.5L, 3L): A waterproof-breathable composite consisting of multiple layers 2, 2.5, or 3L that achieve a high degree of windproofness. The outer layer is typically a more material, such as a Nylon fabric. A typical fabric constriction is a ripstop.

Softshell: Textile composite with high water resistance, however, focusing on wind blocking. Wind block may be attained using a waterproof breathable membrane (sandwiched between two textile layers) or using an adhesive or glue to affix 2 textiles or substrates together. The glue is not air permeable and therefore meters air penetration in the composite. Textile fabrics are typically softer woven and knitted fabrics, hence the term softshell. By manipulating the design features for each textile composite, the air permeability can range from between 0 to 100% wind block.

Nanofiber: Defined as fibers with diameters between 100-1000 nanometers. Nanofibers provide high surface area and unique properties at the nanoscale level.

Nonwoven: fabric-like materials that are made from fibers bonded together by something other than a weaving process, such as chemical, heat, mechanical, or solvent processes. The fibers are entangled, creating a web structure. The entanglement creates pores between fibers, providing some degree of air permeability.

Persons skilled in the art will recognize that many modifications and variations are possible in the details, materials, and arrangements of the parts and actions which have been described and illustrated in order to explain the nature of the inventive subject matter, and that such modifications and variations do not depart from the spirit and scope of the teachings and claims contained therein.

All patent and non-patent literature cited herein is hereby incorporated by references in its entirety for all purposes.

Further disclosed are the following aspects:
1. A method of producing a waterproof/breathable membrane, comprising:
   forcing a fluid, fiber-forming material through at least one outlet port disposed in an apparatus configured to expel a jet of the material, the apparatus configured to provide a jet that is fine enough to solidify on a collector as a superfine fiber, the primary expulsion force of the jet being other than an applied electrical field; and expelling the material until a web of superfine fibers is formed on the collector; working the web to a density and porosity sufficient to provide waterproofness and breathability to a selected standard.
2. The method of claim 2 wherein the web comprises nanoscale fibers that are worked to a thickness of at least about 7 micrometers.
3. The method of claim 2 wherein the web has an average pore size of at least 250nm.
4. The method of claim 2 wherein the thickness of the web is between about 7 to about 50 micrometers.
5. The method of claim 1 wherein the average pore size is between about 250 to about 1500 nm.
6. The method of claim 4 wherein the average pore size is between about 250 to about 1500 nm and the web thickness is between about 7 to about 50 micrometers.
7. The method of any of the claims wherein the average fiber diameter is less than 1000 nm.
8. The method of any of the claims wherein the average fiber diameter is less than 1000 nm.
9. The method of any of the claims wherein the average fiber diameter is less than 500 nm.
10. The method of any of the claims wherein the average fiber diameter is less than 100nm.
11. The method of any of the foregoing claims wherein the average fiber diameter is less than 50nm.
12. The method of any of the claims wherein the average fiber has an aspect ratio of at least 100.
13. The method of any of the claims wherein the fiber-forming material comprises PTFE or a polyurethane-based material.
14. The method of any of the claims wherein the apparatus comprises a force-spinning apparatus and centrifugal force is the primary force that expels the fiber-forming material from the at one or more outlet ports.
15. The method of any of the claims wherein the collector of the fibers comprises a component of an end product or a 3D mold or other form for an end product.
16. The method of claim 15 wherein the end product or component thereof is a garment or apparel item, e.g., a jacket or pants; an item of footwear, e.g., a shoe or sock; headwear, e.g., a soft cap, a brimmed or visored hat, or a facemask; an item of outdoor equipment, e.g., a sleeping bag or shell for a sleeping bags, a blankets, a tent, a tarp or other cover; or an item of luggage or pack, e.g., a soft- sided bag, a backpack, a waist pack, a suitcase, a duffel bag, a bike messenger bag and other bags, or a briefcase.
17. The method of any claim wherein the fibers are collected onto a sheet of material to form a bilayer of material.
18. The method of claim 1 wherein the sheet of material comprises a synthetic polymer material, such as a nylon, polyester, or polyethylene based material or a natural material such as wool or leather, plant-based biomaterials, or blends of the foregoing.
19. The method of claim 15 wherein the collector comprises a mold that supports a component of the end product and the fibers are deposited on the mold and/or the component.
20. The method of any of the claims wherein the collector comprises a last for a shoe or a mold for a glove.
21. The method of claim 20 wherein the last supports another component for a shoe, such as a component of an outsole.
22. The method of claim 19 or 20 wherein the fibers are deposited so as to form an integral unit with the component.
23. The method of claim 15 wherein the fibers are collected on a 3D mold or structure that represents an article of apparel or part thereof, e.g., a sleeve or pant leg, the collected fiber providing a seamless enclosure for an area of the intended user's body.
24. The method of any of the claims wherein the collector disposed on a continuous belt or other transport that may be selectably moved across the outlet port area for the apparatus.
25. The method of any of the claims wherein the apparatus includes an associated fiber-directing system for directing jets or fiber on the collector.
26. The method of claim 25 wherein the fiber-directing system is configured to provide a directing airflow to the collector (e.g., a fan or vacuum).
27. The method of any of the claims comprising the further steps of assembling the web to other components of an end product or depositing on the web other materials for use in the end product, such as those end products in claim 16.
28. The method of any of the claims wherein the assembling is done in-line with the web formation.
29. The method of any of the claims wherein a plurality of different fiber types are expelled from the outlet port(s) of the apparatus to form a heterogeneous web of fibers, the fibers differing in material composition and/or structural properties.
30. A web of superfine fibers according to the fiber or web parameters or any combination thereof of any of claims 2-13.
31. Any combination of fiber material blends and fiber diameters/geometries according to any of claims 1-3 wherein the fiber blends are produced by jet extrusion via multiple spinnerets, the spinnerets providing a plurality of outlet ports, each outlet port intended for a predetermined fiber-type, the blend being collected as a web on another layer of fabric or a composite of fabric layers, which layers may or may not incorporate a combination of different fiber material blends.
32. Related apparatus and post-web formation processing into end products.
33. A construct of fibers that substantially mimics down plumules or synthetic insulative batting.
34. The construct of claim 33 wherein the construct has a fill power equivalent of 450 to 1,000.
35. The construct of claim 34 where in the fill power equivalent is at least 650.
36. A method of producing a filament, comprising an agglomeration of fibers oriented in the same direction over a predetermined length, the method steps comprising:
   forcing a fluid, fiber-forming material through at least one outlet port disposed in an apparatus configured to expel a jet of the material, the apparatus configured to provide a jet that is fine enough to solidify on a collector as a superfine fiber, the primary expulsion force being other than an applied electrical field; expelling the material until a web of superfine fibers is formed on the collector; and working the web to a density and porosity sufficient to provide waterproofness and breathability to a selected standard.
37. A force spinning system, comprising: a spinneret with an associated axis of rotation, a fiber collector spaced apart from the spinneret, the collector having a spinnable surface for receiving a fiber, the surface having an associated axis, and the collector being spinnable about the axis, the collector being oriented with its axis generally parallel or perpendicular to the axis of rotation of the spinneret and positioned relative to the spinneret so that a stream of fiber material ejected from the spinneret is received on the collector and is spoolable onto the collector with the fibers oriented generally in parallel.
38. The system of claim 37 wherein the collector is disposed with its axis generally parallel to the axis of spinneret and wherein the system is configured so that collector is orbital around the spinneret, or, alternatively, the spinneret is orbital around the collector, in which case the collector may not spin around its own axis.
39. The system of claim 37 wherein the collector is disposed below and centered generally under the axis of rotation of the spinneret.
40. A force spinning method, comprising: operating a spinneret with an associated axis of rotation, ejecting from the spinneret a stream of fiber-forming material, and collecting the streaming material on a collector so that the fibers are oriented generally in parallel.
41. The method of claim 40 wherein the collector has a relative orbital rotation about the spinneret and/or around its own axis so as to collect the fibers in the generally parallel orientation.
42. The system or method of claim 36 wherein the system is configured to produce filaments in the range of 1 to 300 denier.
43. The system or method of any claim wherein the system is configured to produce fibers with aspect ratios of at least 100, 500, 1000, 5000 or higher relative to the fiber diameters of any claim and wherein the collected fibers have lengths of at least 1 meter, 10 meters, or more.
44. The system or method of any claim wherein the system or method is configured or performed to produce fibers or filaments suitable for use in the weaving or knitting of textiles, particularly textiles suitable for use in making garments and apparel.
45. A textile made from a yarn or other filament comprising a collected fiber from any of the foregoing claims to a system or a method.
46. A garment or apparel item made from the textile of claim 45.
47. A collected fiber made according to any method or using any system of any claims 36-45.

## Claims

1. A fill material suitable for use as an insulative or cushioning material in footwear, outdoor apparel, and/or outdoor equipment, the fill material comprising:
a plurality of discrete units comprising clusters or loose webs of fibers, the fibers comprising superfine fibers and/or fibers in a range of 1 to 5 denier; the fibers being entangled to form the clusters or loose webs.

2. The fill material of claim 1 wherein the clusters or webs of fibers comprise a plurality of fibers, the fibers each being a multinode fiber structure formed of fiber material formed into a unitary, multinode fiber structure, the multinode fiber structures being agglomerated as clusters or webs.

3. The fill material of claim 1 wherein a combination of fiber types are included in the clusters or webs, the fiber types being selected from one or more of the following fiber type variations: (1) variation in fiber material and/or (2) variation in fiber diameters or cross-sectional geometries.

4. The fill material of claim 3 wherein the fibers in a cluster or web comprise superfine fibers.

5. The fill material of claim 4 wherein the fibers in the clusters or webs of fibers comprise a blend of superfine fibers and fibers having of at least 1 denier.

6. The fill material of claim 1 wherein the fill material has a fill power equivalent of 450 to 1,000.

7. The fill material of claim 1 wherein the average fiber diameter is less than 100 nm.

8. The fill material of claim 1 wherein the average fiber diameter is less than 50 nm.

9. The fill material of claim 2 wherein the fibers comprise fibers having tubular or otherwise non-solid cores.
